Europäisches Patentamt

European Patent Office

Office européen des brevets

(19)

(11) **EP 1 447 023 A1**

(12) **EUROPEAN PATENT APPLICATION**

(43) Date of publication:
**18.08.2004 Bulletin 2004/34**

(51) Int Cl.7: **A47B 13/02**, F16B 12/44

(21) Application number: **03425083.7**

(22) Date of filing: **12.02.2003**

| | |
|---|---|
| (84) Designated Contracting States:<br>**AT BE BG CH CY CZ DE DK EE ES FI FR GB GR**<br>**HU IE IT LI LU MC NL PT SE SI SK TR**<br>Designated Extension States:<br>**AL LT LV MK RO**<br><br>(71) Applicant: **Robur International srl**<br>**31100 Treviso (IT)** | (72) Inventor: **Cremasco, Paolo**<br>**31033 Castelfranco Veneto (Treviso) (IT)**<br><br>(74) Representative: **Agostini, Agostino et al**<br>**Dragotti & Associati srl**<br>**Via Paris Bordone, 9**<br>**31100 Treviso (IT)** |

(54) **Fitting arrangement for the attachment of an elongate member to a planar surface**

(57)    Fitting arrangement for the attachment of an elongate hollow member (30) to a planar surface (1), such as for instance the attachment of a leg to the top surface of a table, comprising a body (10) provided with an end portion (13) adapted to be attached to the planar surface (1). A protrusion (11), which is preferably provided with a tapered surface, is adapted to deform a second intermediate body (20) coupled with an elongate member (30), in such a manner as to eventually fasten this elongate member to said planar surface (1).

Fig. 1

## Description

The present invention refers to a low-cost fitting arrangement that is capable of being easily manufactured, as well as quickly and simply assembled, intended for use as an attachment for an elongate member of any cross-sectional shape whatsoever to a planar surface, such as for instance to the flat top surface of a table.

Widely known in the art is the fact that such a kind of an attachment has always given rise to considerable problems for manufacturers and designers to cope with, owing exactly to the need for a firm and easily carried-out connection of the end portion of a leg, or support post, to the top flat surface of a table to be made possible, while at the same enabling such a connection to be conveniently disassembled when needed.

To such a purpose, attachment fitting arrangements of increasingly simple construction have been developed up to this time, actually, in view of making it possible for a table to be assembled in a quick and simple manner directly on the installation or use site thereof, further to minimizing bulk and space requirements to facilitate handling, transport and storage.

A first solution that meets such requirements is represented by an attachment fitting for fastening a leg to the top surface of a table, which makes use of an expansible body which is part of a flange provided with radial arms that are attached to the top surface - see disclosure in IT-A-1028018.

The end portion of the leg is inserted in said expansible body while the latter is in its resting configuration; subsequently, this body is caused to expand so that the side surface of said body is brought in engagement with the inner surface of the end portion of the leg, thereby coupling with it and fastening it to the table.

The expansion of said body is brought about by screwing in a headless screw inserted in a suitable threaded bore provided in the flange through a hole provided in the leg.

A solution of this kind, while being effective in targeting and, at least partially, solving the above-mentioned problems in a quite satisfactorily manner, has nevertheless a number of other drawbacks that contribute to a more complicated construction and a more difficult use thereof, for instance due to the need of providing the threaded bore for the flange expanding screw to be fit in, which calls necessarily for particular machining operations to be carried out and substantially significant costs to be sustained in connection therewith.

For a second example of a fitting arrangement for the attachment of a leg to the top surface of a table, reference is made to the disclosure in IT-A-1279470, which seems to more effectively comply with the requirements of a simple construction, convenient assembly and reliability. This fitting arrangement is constituted by a flange provided with substantially radial arms adapted to be fastened to the lower side of the top surface of the table, as well as an expandable clamp-like member comprising at least two portions, each one of which is firmly joined to a respective radial arm, such a clamp-like member constituting the actual means for fastening the end portions of the leg to the top surface of the table. More particularly, this clamp-like member is capable of being spread apart, so that it is caused to move from a resting configuration, in which it is close together, into a fastening configuration, in which it is spread out, by simply tightening the screws configurationed in the radial arms of the flange.

While proving effective in overcoming the drawbacks connected with the afore described first solution, this second example of attachment fitting arrangement still has a drawback in that it involves the use of screws for fastening, so that it calls for the use of dedicated tools to carry out the above cited assembly.

A further drawback lies in the fact that such an attachment fitting can be solely used in connection with hollow legs or support posts that must in addition have a circular shape in their cross-section.

A fitting arrangement for attaching and fastening an elongated member to a planar surface has been now developed, and is actually a main object of the present invention, which is particularly suited to such a purpose as attaching and fastening a leg to the top surface of a table, while enabling all of the afore mentioned drawbacks of prior-art solutions to be done away with.

A further purpose of the present invention is to provide a fitting arrangement which is simple to manufacture and, therefore, substantially low-cost.

Still another purpose of the present invention is to provide a fitting arrangement which is versatile, i. e. capable of being adapted to any cross-sectional shape or type whatsoever of the elongate member to be fastened.

These and further aims are reached in a fitting arrangement incorporating the characteristics recited in the appended claims.

Anyway, features and advantages of the fitting arrangement according to the present invention will be more readily understood from the description of a preferred, although not sole embodiment, which is given below by way of nonlimiting example with reference to the accompanying drawings, in which:

- Figure 1 is an exploded view of all parts that make up a fitting arrangement according to the present invention;

- Figure 2 is a longitudinal cross-sectional view in which some construction details of the fitting arrangement are put in better evidence;

- Figure 3 and Figure 4 are views illustrating the resting configuration and the expanded or spread-out configuration, respectively, of one of the component parts of the fitting arrangement;

- Figure 5 is an overall view of the component parts of the fitting arrangement upon assembly;

- Figure 6 is a cross-sectional view of the fitting arrangement along the line I-I of Figure 5;

- Figure 7 and Figure 8 are a longitudinal sectional view and a cross-sectional view, respectively, of a second embodiment of the fitting arrangement according to the present invention.

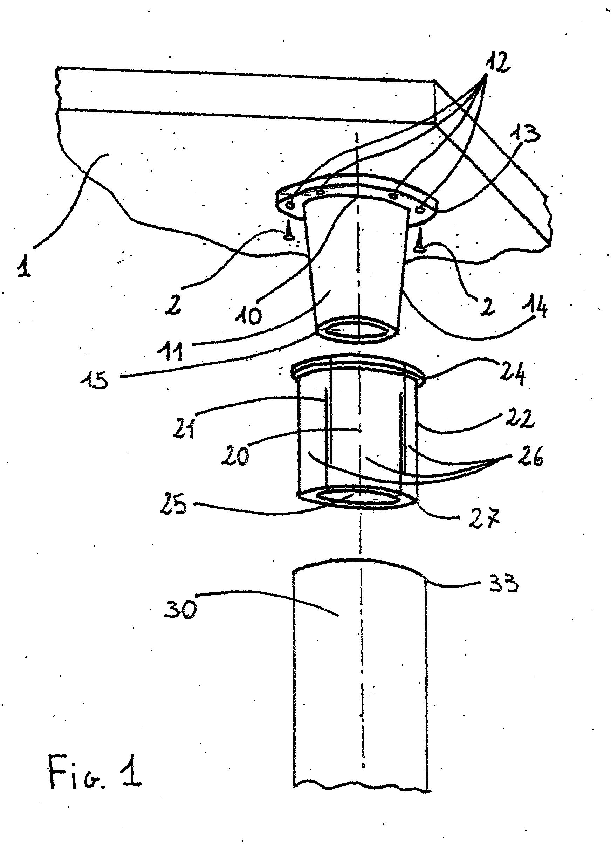

With particular reference to Figures 1 to 6, it can be clearly noticed that the fitting arrangement according to the present invention substantially comprises two parts.

The first such part of the fitting arrangement is a body 10 of non-deformable material formed by a flange 13, which has a diameter $D_4$ and is provided with holes 12 enabling it to be screwed on to the top surface 1, and is further formed by a frusto-conical, preferably hollow protrusion 11. This protrusion 11 has a height $H_2$ and its outer surface is characterized by following diameters: $D_3$ = largest diameter at the flange 13 and $D_1$ = smallest diameter at the free end portion 15. From these data, a tapering angle is obtained which is equal to:

$$\alpha_1 = 2 \cdot \text{arctg} \left( \frac{1}{2} \cdot (D_3 - D_1) \cdot 1 / H_2 \right).$$

The second part, which is referred to as the intermediate body 20 in this description, is formed by a cylindrical body having a height $H_1$, which terminates in an outwardly projecting peripheral retaining rim 24.

This intermediate body 20 has an axial cavity 25 extending therethrough, the side surface 23 of which is in the shape of a frustum of a cone and is characterized by following diameters: $D_2$ = largest diameter at the peripheral retaining rim 24 and $D_1$ = smallest diameter at the end portion 27, wherein this diameter is equal to the one at said free end portion 15 of the body 10. Therefore, the resulting tapering angle is equal to:

$$\alpha_2 = 2 \cdot \text{arctg} \left( \frac{1}{2} \cdot (D_2 - D_1) \cdot 1 / H_1 \right),$$

which must be the same as $\alpha_1$.

According to a major feature of the present invention, the intermediate body 20 is made of a substantially rigid material, but is made deformable, i.e. is enabled to deform through the provision of longitudinal slits 21, so that its outside diameter is able to change from a minimum value $D_5$ to a maximum value $D_6$.

Furthermore, the leg of the table is in this case represented by the elongate member 30.

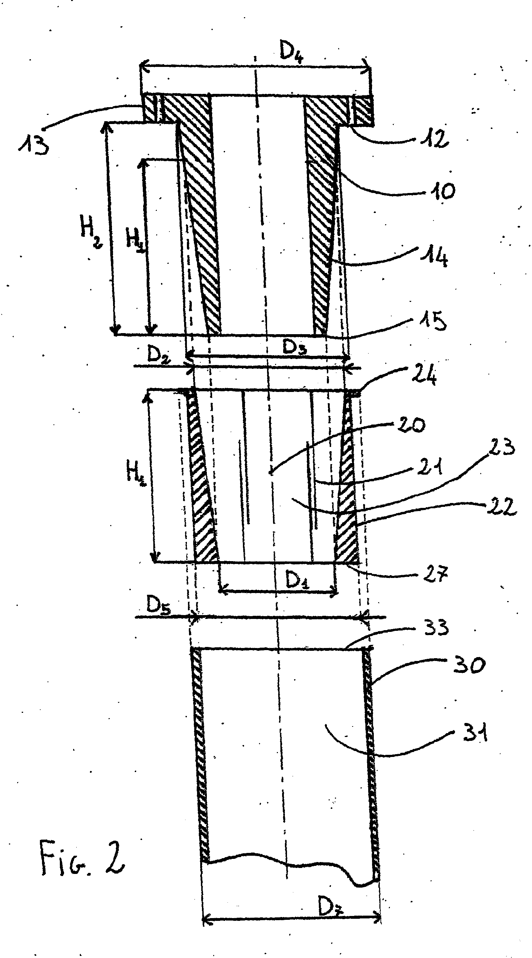

As this can be best noticed in Figure 2, the leg 30 has an axial cavity 31 extending therethrough, in which this cavity starts at the free end portion 33 thereof and enables the leg to be coupled with the intermediate body 20 starting from the end portion 27 thereof. For this reason, the inside diameter of the leg 30 has a value $D_7$ which lies in the middle between the afore cited values $D_5$ and $D_6$ of the outside diameter of the intermediate body 20.

A closer look shall now be taken at the sequence of the assembly procedure with a view to clearly demonstrate how simply and quickly this can be carried out, actually.

The first operation to be carried out consists in fastening the body 10 to the top surface 1 with the aid of screws 2 to be tightened through the holes 12.

The next operation consists in inserting the intermediate body 20 into the axial cavity 31 of the elongate member 30 until the free end portion 33 of the latter abuts against the peripheral retaining rim 24. The third operation simply consists in coupling the frusto-conical protrusion 11 of the body 10 with the intermediate body 20, which is already fitted in the elongate member 30.

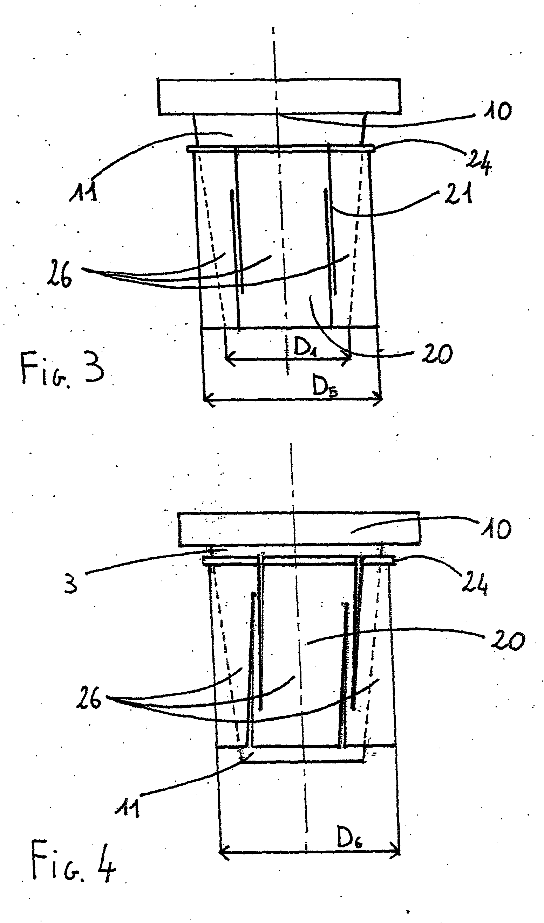

As this can be best seen in Figure 3 (where the elongate member 30 is not shown for reasons of greater simplicity), while in its resting configuration, the intermediate body 20 has its axial cavity 25 that is complementary to the frusto-conical protrusion 11, owing to the fact that the outer surface 14 and the inner surface 23 are characterized by a same taper angle, i.e. $\alpha_1 = \alpha_2$, and a same minimum diameter $D_1$. In this configuration, such a complementarity ensures adhesion of the two surfaces to each other, while not causing the intermediate body 20 to expand.

At this point, a pressure is exerted so as to obtain a relative axial displacement between the body 10 and the subassembly formed by the intermediate body 20 fitted into the leg 30. According to a major feature of the present invention, such a further penetration of said two members into each other has the effect of causing the sectors 26 (see Figure 4) to displace radially, so that they end up by engaging the cavity 31 of the leg 30, which is therefore fastened to the table surface 1 by an interference fit.

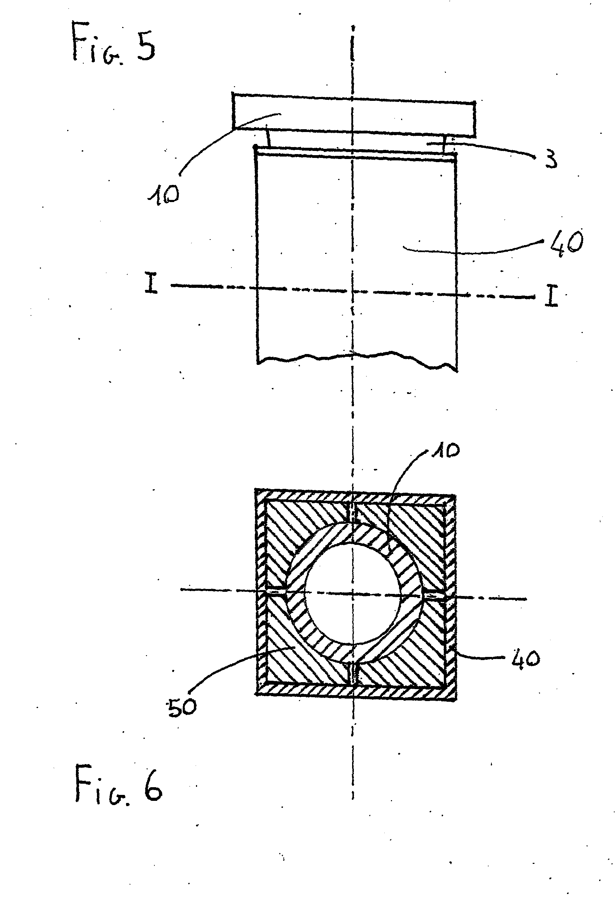

The leg 30 can then be disassembled from the top surface 1 by applying a force in the opposite direction, in such a manner as to cause the frusto-conical protrusion 11 to be pulled out of the axial cavity 25. This extraction of said frusto-conical protrusion 11 can be facilitated by levering it with a screwdriver duly applied in the gap 3 created between the flange 13 and the peripheral retaining rim 24 (see Figures 4 and 5).

The assembly work of the fitting arrangement can therefore be fully appreciated to be extremely simple and convenient to carry out, without calling for the use of any auxiliary tools specially dedicated to such a purpose, except for the sole fastening of the flange 13 to the flat surface 1 by means of screws. As a result, the great practicableness and convenience in the use of such a fitting arrangement are fully apparent, along with the rapidity with which it is assembled and disassembled.

According to one of the innovatory features of this invention, said fitting arrangement turns out to be very versatile. The term versatile is used here to indicate the possibility for such a fitting arrangement to be adapted to elongate members that may have a cross-section of any type or shape whatsoever. For instance, Figures 5 and 6 show a hollow elongate member 40 with a square-shaped cross-section, which is associated to an intermediate element 50 with a corresponding cross-section, and in which the protrusion 11 of the body 10 is inserted. The insertion of the protrusion 11 can be obtained not only by the application of pressure, but, in the case that said protrusion 11 is duly threaded, also by screwing it in.

Such a versatility is therefore obtained by suitably modifying the outer periphery of the cross-section of the intermediate body in such a manner as to make it similar to the inner periphery of the cross-section of the hollow elongate member.

Another similar embodiment (not shown in the Figures) of the invention consists in using a body with a protrusion of a frusto-pyramidal shape, instead of a frusto-conical one. Even in this case it will be possible for the fitting arrangement to be implemented, for instance when a hollow elongate member with an elliptical cross-section is employed, by means of an intermediate body having, further of course to a frusto-pyramidal axial cavity that is complementary to the one of the protrusion, an outer surface that has a cross-section corresponding to the one of the tubular member used.

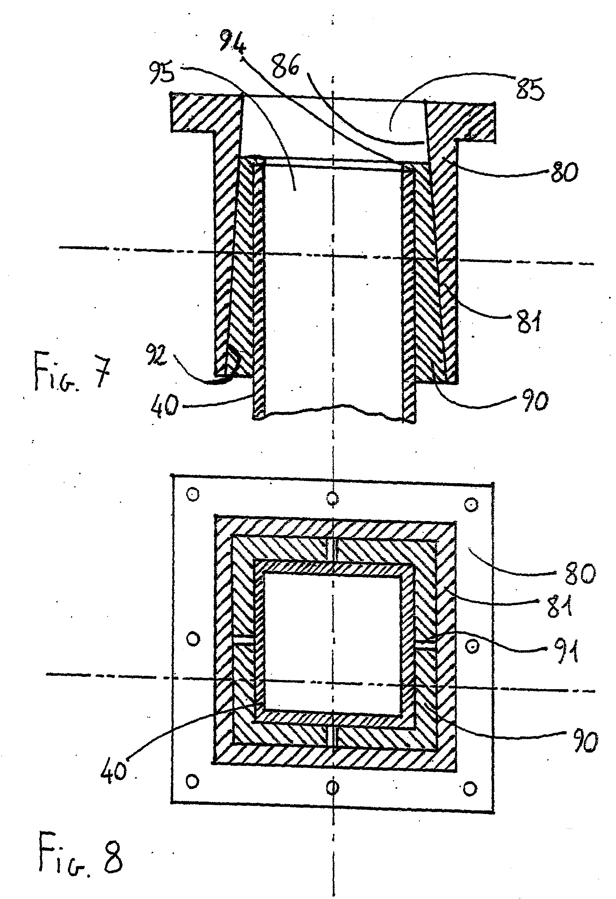

A further variant of the invention is illustrated in Figures 7 and 8, which show a body 80 with a protrusion 81 that has a cavity 85 with a side surface 86 of a frusto-pyramidal shape, which is complementary to the outer surface 92 of an intermediate body 90. Such an intermediate body 90 is provided with an inwardly extending peripheral retaining rim 94; it further has an axial cavity 95 that is made capable of contracting by the provision of slits 91 and is further capable of receiving a rigid, not necessarily hollow elongate member 40 into it.

Fully apparent from the above description are at this point the various advantages deriving from the use of the fitting arrangement according to the present invention, one of which certainly consists in a body 10, 80 that is most easy to manufacture and is capable of deforming an intermediate element 20, 50, 90 fitted in an elongate member 30, 40 by the application of a simple pressure, so as to fasten it by interference to a flat surface 1.

It will be appreciated that the fitting arrangement according to the present invention may be the subject of a number of other variants and/or modification without departing from the scope of the appended claims.

## Claims

1. Fitting arrangement for the attachment of an elongate hollow member (30; 40) to a planar surface (1), such as for instance the attachment of a leg to the top surface of a table, comprising a body (10; 80) provided with an end portion (13) adapted to be attached to the planar surface (1), **characterized in that** said body (10; 80) has a protrusion (11; 81) that is provided with a surface (14; 86) adapted to deform a second intermediate body (20; 50; 90) that is coupled to an elongate member (30; 40), thereby fastening said elongate member to said planar surface (1).

2. Fitting arrangement for the attachment of an elongate member according to claim 1, **characterized in that** said deforming surface of the protrusion (18; 81) is threaded.

3. Fitting arrangement for the attachment of an elongate member according to claim 1, **characterized in that** said deforming surface (14; 86) of the protrusion (18; 81) has a tapered shape.

4. Fitting arrangement for the attachment of an elongate member according to any of the preceding claims, **characterized in that** said intermediate body (20; 50; 90) is adapted to be deformed by its engaging said protrusion (11; 81).

5. Fitting arrangement for the attachment of an elongate member according to any of the preceding claims, **characterized in that** said elongate member (30; 40) and said intermediate body (20; 50; 90) have complementary surfaces.

6. Fitting arrangement for the attachment of an elongate member according to any of the preceding claims, **characterized in that** said intermediate body (20; 50; 90) is made of a rigid material and is provided with at least a slit.

7. Fitting arrangement for the attachment of an elongate member according to claims 1, 4, 5 and 6, **characterized in that** said intermediate body (20; 50; 90) has a peripheral retaining rim (24; 94) at its end portion facing the body (10; 80).

Fig. 1

Fig. 2

Fig. 3

Fig. 4

Fig. 5

10

3

40

I — — — I

10

40

50

Fig. 6

Fig. 7

Fig. 8

European Patent Office

**EUROPEAN SEARCH REPORT**

Application Number

EP 03 42 5083

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 33699 A (VON DER MUEHLEN GUENTER) 15 June 2000 (2000-06-15) * page 5, line 30 - last line * * page 6, line 12 - line 26 * * page 7, line 12 - page 8, line 3 * * figures 1,2 * | 1,3-7 | A47B13/02 F16B12/44 |
| X | EP 0 278 016 A (ENCONTRE YVES M) 17 August 1988 (1988-08-17) * column 3, line 44 - column 5, line 23 * * figures 1-4 * | 1-5 | |
| X | EP 1 050 244 A (ODORICO MARCO ;ODORICO ANGELO (IT)) 8 November 2000 (2000-11-08) * figures * | 1,3-6 | |
| X | GB 2 219 060 A (LEE BENJAMIN LEONARD) 29 November 1989 (1989-11-29) * abstract * * figures * | 1,4-6 | |
| | ----- | | TECHNICAL FIELDS SEARCHED (Int.Cl.7) A47B F16B |

The present search report has been drawn up for all claims

| Place of search | Date of completion of the search | Examiner |
|---|---|---|
| THE HAGUE | 21 July 2003 | van Hoogstraten, S |

EPO FORM 1503 03.82 (P04C01)

**ANNEX TO THE EUROPEAN SEARCH REPORT
ON EUROPEAN PATENT APPLICATION NO.**

EP 03 42 5083

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2003

| Patent document cited in search report | | Publication date | Patent family member(s) | | Publication date |
|---|---|---|---|---|---|
| WO 0033699 | A | 15-06-2000 | DE<br>WO<br>EP | 29821851 U1<br>0033699 A1<br>1137352 A1 | 04-03-1999<br>15-06-2000<br>04-10-2001 |
| EP 0278016 | A | 17-08-1988 | EP<br>US | 0278016 A1<br>4662591 A | 17-08-1988<br>05-05-1987 |
| EP 1050244 | A | 08-11-2000 | IT<br>EP | UD990041 A1<br>1050244 A2 | 23-08-2000<br>08-11-2000 |
| GB 2219060 | A | 29-11-1989 | NONE | | |

EPO FORM P0459